# EUROPÄISCHE PATENTSCHRIFT

(11) **EP 3 118 910 B1**
(45) Veröffentlichungstag und Bekanntmachung des Hinweises auf die Patenterteilung: **30.03.2022**
(21) Anmeldenummer: 15176896.7
(22) Anmeldetag: 15.07.2015
(51) Int. Cl.: H01M 50/211, H01M 50/264, B29C 65/00

(54) **AUFNAHMEELEMENT FÜR POUCH-ZELLEN**
HOLDING ELEMENT FOR POUCH CELLS
ÉLEMENT DE RECEPTION POUR CELLULES POUCH

(43) Veröffentlichungstag der Anmeldung: 18.01.2017
(73) Patentinhaber: Carl Freudenberg KG, 69469 Weinheim (DE)
(72) Erfinder: Kritzer, Peter, Dr., 67147 Forst (DE); Nahrwold, Olaf, 67071 Ludwigshafen (DE); Pressler, Ulla, 69502 Hemsbach (DE); Boggasch, Mark, 69514 Laudenbach (DE)

(56) Entgegenhaltungen:
- EP-A1- 2 597 698
- WO-A1-2013/079080
- WO-A1-2014/003357
- US-A1- 2011 008 665

## Beschreibung

### Technisches Gebiet

Die Erfindung betrifft eine Anordnung mit mindestens zwei Aufnahmeelemente (4) und mindestens eine Pouch-Zelle gemäß dem Anspruch 1.

### Stand der Technik

EP2597698, US2011/008665, WO2013/079080 und WO2014/003357 offenbaren verschiedene Anordnungen mit Pouch-Zellen.

Großformatige Batterie-Systeme, welche beispielsweise auf einer Lithium-Technologie, beispielsweise Lithium-Ionen, Lithium-Polymer, Lithium-Schwefel, basieren, kommen in mannigfaltigen Anwendungen zum Einsatz. Üblicherweise umfasst ein Batterie-System 50 bis 200 Zellen. Bei großformatigen Energiespeichern sind auch mehrere tausend Zellen üblich.

Pro Modul kommen typischer Weise 6 bis 12 Zellen zum Einsatz, wobei die Zellenzahl meistens durch eine Modulspannung von 50 V begrenzt ist. Oberhalb von 50 V gelten die Module als Hochspannungskomponenten.

Die Zellen können in verschiedenen Ausführungen vorliegen, nämlich als Rundzellen mit festem Metallgehäuse, als prismatische Zellen mit festem Metallgehäuse oder als Pouch-Zellen mit einem flexiblen Foliengehäuse.

Pouch-Zellen weisen wesentliche Vorteile gegenüber Zellformen mit festen Gehäusen auf.

Die Energie- bzw. Leistungsdichte ist höher, weil das Gehäuse weniger wiegt.

Die Herstellkosten sind deutlich geringer, da das Gehäuse günstiger ist.

Die Assemblierung eines Elektroden-/ Separator-Stacks in das Gehäuse kann in einen Laminier-Herstellungsprozess integriert werden.

Die Zellengröße kann einfach geändert werden, da größere bzw. dickere Zellen kein neues Zellgehäuse benötigen. Damit können die Zell-Hersteller schnell auf Anforderungen der Verbraucher reagieren.

Pouch-Zellen unterstützen zukünftige Trends von Aktivmaterial-Entwicklungen. So zeigen beispielsweise Anodenmaterialien auf Nicht-Graphit-Trägerbasis eine deutlich höhere Volumenarbeit beim Zyklisieren, was zu einer höheren Dickenausdehnung des Zellgehäuses führt. Dieses Atmen kann durch feste Gehäuse nur begrenzt toleriert werden. Darüber hinaus ist das Pouch-Zellen-Design auch auf zukünftige Zell-Chemie-Konzepte, beispielsweise Alkalimetall-Schwefel-Konzepte, anwendbar.

Auf der anderen Seite stehen dem folgende technische Nachteile gegenüber: Die Montierbarkeit der flexiblen Zellen in einem Modul- bzw. System-Gehäuse ist aufwendig. Die Zellendicke ändert sich beim Laden. Im Störfall ist der Ort der Zellöffnung nicht vorhersehbar.

Die nachfolgende Tabelle stellt die Zelltypen einander gegenüber:

| | Rundzelle | | Prismatische Zelle | | Pouch-Zelle | |
|---|---|---|---|---|---|---|
| System: | *Elektroden & Separator gewickelt Metall-Gehäuse* | | Elektroden & Separator gestapelt Metall-Gehäuse | | Elektroden & Separator gestapelt oder gewickelt Folien-Gehäuse | |
| Technische Vorteile | | • Kühlung effektiv | | • Kein Totvolumen zwischen den Zellen | | • Kein Totvolumen zwischen den Zellen |
| | | • Feste Elektroden | | | | |
| | | • Stabiles Gehäuse | | | | |
| | | • Mechanisch unempfindlich | | • Feste Elektroden | | • Skalierbarkeit |
| | | | | • Stabiles Gehäuse | | • Kühlung in der Zelle effektiv |
| | | | | • Mechanisch unempfindlich | | |
| | | | | | | • Leicht |
| | | | | • Kühlung in der Zelle effektiv | | • Geringere Prod.-Kosten |
| Technische Herausforderungen | | • Schwer | | • Schwer | | • Montierbarkeit im Gehäuse |
| | | • Kühlung in der Zelle ineffektiv | | • Im Störfall schnelles Abblasen von Gas | | |
| | | | | | | • Zellendicke ändert sich beim Laden |
| | | • Skalierbarkeit eingeschränkt | | | | |
| | | | | | | • Im Störfall Ort der |
| | | • Totvolumen zwischen den Zellen | | • Skalierbarkeit eingeschränkt | | Zellöffnung nicht vorhersehbar |

Pouch-Zellen für die oben genannten Anwendungen weisen folgende typischen Dimensionen auf: Die Fläche beträgt ca. 100 x 100 mm² bis 300 x 400 mm².

Die Dicke beträgt ca. 8-15 mm. Eine erhöhte Zellgröße kann beispielsweise eine erhöhte Zellkapazität, beispielsweise für Energie-Batterien, oder aber eine erhöhte Zellleistung (bei Leistungsbatterien) bewirken. Auch kann durch einen Wechsel des Aktivmaterials eine Anpassung der Zellabmessungen notwendig sein. Es können dickere Zellen bei gleichen Systemparametern und bei Verwendung eines weniger energiedichten Aktivmaterials notwendig sein.

Die Fixierung und/ oder Lagerung von Pouch-Zellen in einem Gehäuse ist schon im Stand der Technik beschrieben. Wesentliche Nachteile der bisherigen Fixierungskonzepte sind die folgenden: Die Zellen werden in einen mehr oder weniger komplexen Rahmen eingebettet. Dadurch erfordert eine neue Zellengröße einen komplett neuen Rahmen. Dies wiederum ist in der Regel durch hohe Investitionen, beispielsweise durch neue Werkzeuge bei Verwendung von Kunststoff - oder Polymer-Rahmen, verbunden. Hiermit ist einer der wesentlichen Vorteile - die Möglichkeit der schnellen und kostengünstigen Skalierbarkeit der Zellgröße - nicht effektiv nutzbar.

Des Weiteren sind die Herstellungsprozesse für Rahmen langsam im Vergleich zu denen für Zellen. Dementsprechend ist ein Rahmenproduktionsprozess entweder der Engpass einer Batterie-System-Produktion, oder die Rahmen müssen in einer Vielzahl paralleler Anlagen oder Werkzeugen gefertigt werden. Dies wiederum erfordert hohe Investitionen.

### Darstellung der Erfindung

Der Erfindung liegt daher die Aufgabe zugrunde, Pouch-Zellen sicher und kostengünstig in einem Rahmen oder Gehäuse aufzunehmen.

Die vorliegende Erfindung löst die zuvor genannte Aufgabe durch die Merkmale des Patentanspruchs 1.

Erfindungsgemäß wird ein Aufnahmekonzept für Pouch-Zellen beschrieben, welches folgende grundlegenden Vorteile aufweist: Das grundlegende Aufnahmeelement weist ein extrudiertes Profil aus Elastomer, thermoplastischem Elastomer oder aus einem Material auf, welches zumindest teilweise aus den vorgenannten Elastomeren besteht. Das erfindungsgemäße Profil ist an und/ oder um die Siegelnaht der Pouch-Zelle gelegt. Dabei kommt die Siegelnaht entweder in eine Aussparung eines einzelnen Profils oder in eine Aussparung zwischen zwei benachbarten Profilen. Durch Verpressung wird die Siegelnaht elastisch verpresst. Die Längen- und/ oder Breitenausdehnung der Pouch-Zelle kann durch einfaches Ablängen der Profile kompensiert werden. Durch die Verwendung von Profilen ergeben sich folgende wesentliche Vorteile: Für extrudierte Profile fallen keine hohen Werkzeugkosten an. Die Profile lassen sich einfach an die Länge und/ oder Breite der Pouch-Zellen anpassen. Für unterschiedlich große Pouch-Zellen lassen sich durch Ablängen der Profile perfekt sitzende Aufnahmeelemente schaffen, ohne dass in neue Werkzeuge investiert werden muss.

Neue Werkzeuge fallen beim vorliegenden Konzept prinzipiell immer dann an, wenn neue Pouch-Zellen mit abweichender Dicke gelagert werden sollen. In der Regel sind die Dickenunterschiede zwischen zwei Zellvarianten nicht groß, so dass ein Profil für eine 12 mm dicke Pouch-Zelle ohne weiteres für eine 10 mm dicke Pouch-Zelle verwendet werden kann. Ein Werkzeug für Profile für dicke Pouch-Zellen lässt sich prinzipiell umändern, so das damit auch Profile für dünnere Pouch-Zellen erstellt werden können.

Folglich ist die eingangs genannte Aufgabe gelöst.

Das Profil könnte durch ein kontinuierliches Extrusionsverfahren herstellbar sein. Hierdurch ist das Profil als Strang ausgebildet und leicht verarbeitbar.

Das Profil könnte zumindest teilweise aus einem Elastomer, einem thermoplastischen Elastomer oder einem geschlossenporigen Schaum gefertigt sein oder diese Materialien aufweisen. Da eine Elekrolytbeständigkeit in den meisten Fällen keine Rolle spielen sollte, kann im Prinzip jedes Elastomermaterial, insbesondere NBR, verwendet werden. Denkbar sind auch extrudierte, geschlossenporige Schäume. Hier ist allerdings zu bemerken, dass solche Werkstoffe in der Regel schlechtere mechanische Eigenschaften, insbesondere eine schlechteres Rückstellvermögen, aufweisen als Elastomere.

Eine Einbettung geeigneter gängiger Füllstoffe kann dazu beitragen, Flammschutzanforderungen gerecht zu werden. Für thermisch anspruchsvolle Applikationen ist ein Silikonelastomer eine Alternative. Diese Materialien sind zudem ebenfalls flammenfest. Da in der Regel die Temperaturen, welchen die Profile ausgesetzt sind, rund 60 °C Dauertemperatur bzw. um 85 °C Spitzentemperatur nicht überschreiten, kann auch auf Thermoplastische Elastomere (TPE) zurückgegriffen werden. Hier ist allerdings darauf zu achten, dass die mechanische Verpressung nicht zu stark eingestellt wird und somit über die Lebensdauer der Batterie kein Setzverhalten des Profils auftritt. Thermoplastische Elastomere stellen demnach vor allem eine kostengünstige Alternative zu Elastomeren dar.

Die Verwendung von Hohlkörperfüllstoffen, beispielsweise Glashohlkugeln oder Aerogele, erlauben eine besonders gewichtsoptimierte Ausführung der Profile. Solche Produkte sind besonders interessant für mobile Anwendungen, insbesondere für Luftfahrt- bzw. Automobil-Anwendungen. Diese Hohlkörper führen zudem zu einer thermischen Isolation, welche für gewisse Anwendungen von Vorteil sein kann, beispielsweise für Backup-Batterie-Systeme für stationäre Batterien in kalten Klimaregionen. Die nicht abgeführte Prozesswärme der Batterie verhindert eine starke Auskühlung derselben.

Sollen die Profile hingegen zur Kühlung der Zellen beitragen, können thermisch leitfähige Füllstoffe zum Einsatz kommen. Sofern die Profile nicht mit stromführenden Teilen, insbesondere mit den Poldurchführungen, in Kontakt kommen, sind gängige Kohlenstoff- oder Metall-basierte Füllstoffe von Vorteil. Falls die Profile hingegen in Kontakt mit stromführenden Teilen kommen, insbesondere mit Poldurchführungen, müssen die Profile elektrisch isolierend sein. In diesem Fall können mineralische Füllstoffe wie Bornitrid, AluminiumOxid bzw. -hydroxid die thermische Leitfähigkeit der Elastomere erhöhen.

Das Profil könnte ausschließlich aus einem Elastomer oder einem thermoplastischen Elastomer gefertigt sein. Das Material, aus dem das Profil gefertigt ist, kann komplett aus Elastomer bestehen. EPDM stellt ein kostengünstiges und gegenüber im Schadensfall austretenden Elektrolyten beständiges Material dar.

Das Profil könnte aus zwei Materialien gefertigt sein, wobei ein zweites Material härter ist als ein erstes Material. Zumindest eines der Materialien könnte ein Elastomer oder ein thermoplastisches Elastomer sein. Das härtere Material könnte ein Thermoplast oder ein Metall sein und als Klammer, Anpresselement oder Endanschlagselement fungieren.

Das Profil könnte eine Aussparung aufweisen, um eine Siegelnaht einer Pouch-Zelle aufzunehmen. Die Aussparung kann schlitzartig ausgebildet sein, damit ein einziges Profil eine Siegelnaht aufnehmen kann. Vor diesem Hintergrund ist denkbar, dass im Profil ein in Längsrichtung angeordneter Hohlraum eingearbeitet ist.

Das Profil könnte kammartig ausgebildet sein, nämlich mehrere Aussparungen aufweisen, um Siegelnähte mehrerer Pouch-Zellen aufzunehmen.

Eine Anordnung könnte mindestens zwei Aufnahmeelemente der hier beschriebenen Art und mindestens eine Pouch-Zelle umfassen, wobei die Siegelnaht der Pouch-Zelle in einem Profil oder zwischen zwei benachbarten Profilen platziert ist.

Die Profile könnten die Siegelnaht der Zelle zumindest auf einer Seite elastisch verpressen. Hierdurch wird eine Abdichtung realisiert.

Die Profile könnten die Siegelnaht der Zelle auf beiden Seiten elastisch verpressen. Hierdurch ist ein weiches Verpressen ermöglicht.

Die Aufnahmeelemente könnten zumindest zwei Seiten einer Pouch-Zelle umgeben. Diese Seiten sind bevorzugt frei von Stromableitern.

Die Aufnahmeelemente könnten drei oder vier Seiten einer Pouch-Zelle umgeben. Wenn sich Einbettungselemente an drei Seiten befinden, ist eine schnelle und einfache Montage ermöglicht. Eine Pouch-Zelle mit an einer Seite liegenden Stromableitern kann so vorteilhaft eingebettet werden. Die Einbettungselemente befinden sich dann an den drei übrigen Seiten.

Es könnten auch Bereiche von Stromableitern vom Profil verpresst sein. Hierdurch wird ein Stromableiter stabilisiert.

Ein Bereich der Siegelnaht, der nicht unmittelbar benachbart zu den Stromableitern liegt, könnte nicht vom Profil verpresst sein, um diesen Bereich als Sollbruchstelle im Falle eines inneren Überdrucks auszubilden.

Die Profile könnten als Teile eines Stapels beidseitig auf Siegelnähte anpressen, wobei diese Anordnung zumindest teilweise formschlüssig in einem Gehäuse platziert ist und wobei das Gehäuse die Funktion der Verpressung des Stapels übernimmt.

Weitere technische Vorteile einer Dichtung mittels Profilen, welche die Siegelnaht einer Pouch-Zelle umschließen, sind nachfolgend erläutert.

Ein kritischer Punkt bei einer Siegelnaht ist die Permeation entlang der Siegelnaht. Zum einen kann Elektrolyt von innen nach außen permeieren. Kritischer hingegen ist jedoch die Permeation von insbesondere Sauerstoff und Wasser von außen nach innen. Beides führt zu einer beschleunigten Alterung der Pouch-Zellen. Für auf lange Lebensdauer ausgelegte Pouch-Zellen ist demnach eine längere bzw. breitere Siegelnaht technisch sinnvoll. Ein von außen auf die Siegelnaht pressendes bzw. die Siegelnaht umschließendes Profil reduziert die Permeation von Wasser deutlich. Demnach unterliegen durch solche Profile gedichtete Pouch-Zellen bei gleicher Siegelnahtbreite einer geringeren Alterung. Alternativ kann durch die Dichtung mittels Profilen die Siegelnahtbreite kleiner ausfallen. Demnach kann hiermit eine Platzeinsparung erzielt werden, ohne dass Kompromisse in Bezug auf die Alterung eingegangen werden müssen.

Ein Aufnahmeelement kann jedes Profil aufweisen, welches in den Figuren im Schnitt dargestellt ist.

Ein Batterie-Modul bzw. ein Batterie-System könnte Pouch-Zellen enthalten, welche mit den hier beschriebenen Aufnahmeleementen fixiert sind. Das Batterie-Modul bzw. Batterie-System könnte eine Anordnung der hier beschriebenen Art enthalten.

### Kurzbeschreibung der Zeichnung

### In der Zeichnung zeigen

- Fig. 1: schematische Ansichten von Pouch-Zellen,
- Fig. 2: einen Stapel oder Stack, der mehrere Pouch-Zellen umfasst, wobei die Siegelnaht jeder Zelle in einer Aufnahme eines Profils steckt und wobei benachbarte Profile ineinander greifen und so die Montage eines Stacks mit hier fünf Zellen ermöglicht,
- Fig. 3a: eine Teilansicht des Stapels oder Stacks gemäß Fig. 2, wobei die die Siegelnaht umgebende Aussparung im Profil zusätzlich einseitig oder beidseitig von Längsnoppen flankiert ist, um eine gezielte Verpressung auf die Siegelnaht zu erzielen, wobei lediglich die beiden Hauptseiten einer Pouch-Zelle vom Profil umschlossen sind, um eine besonders einfache Montage des Stapels oder Stacks zu ermöglichen,
- Fig. 3b: eine Schnittansicht des Profils gemäß Fig. 3a,
- Fig. 4: eine Teilansicht eines Stapels oder Stacks, wobei die Siegelnaht jeder Pouch-Zelle in einer Aussparung eines Profils steckt, wobei das Profil um die Ecke gezogen ist und im Bereich der Stromableiter nicht vorhanden ist,
- Fig. 5: einen Stapel oder Stack, der mehrere Pouch-Zellen umfasst, wobei die Siegelnaht jeder Pouch-Zelle zwischen zwei benachbarten Profilen platziert ist, wobei benachbarte Profile durch Verkrallungen ineinander greifen und so die Montage eines Stacks aus hier fünf Zellen ermöglicht ist, wobei im dargestellten Fall lediglich die beiden Hauptseiten einer Pouch-Zelle vom Profil umschlossen sind, um eine besonders einfache Montage des Stacks zu ermöglichen, und wobei zusätzlich eine Kühlung durch einen Luftstrom zwischen den Zellen erzielt werden kann,
- Fig. 6a: eine Teilansicht des Stacks gemäß Fig. 5, wobei ein definierter Abstand oder Spalt zwischen den Zellen einjustiert werden kann,
- Fig. 6b: eine Schnittansicht des Profils gemäß Fig. 5, wobei das Profil ein mehrlippiges Dichtlippendesign aufweist,
- Fig. 7: einen Stapel oder Stack, der mehrere Pouch-Zellen umfasst, wobei die Siegelnaht jeder Pouch-Zelle zwischen zwei benachbarten Profilen steckt, wobei benachbarte Profile durch Verkrallungen ineinander greifen und so die Montage eines Stacks aus hier fünf Zellen ermöglicht ist, wobei die Profile rings um eine Pouch-Zelle herum führen und dadurch auch eine Verpressung der Siegelnaht im Bereich der Stromableiter sicher gestellt ist,
- Fig. 8: eine Schnittansicht eines Profils, wobei eine Aussparung vorgesehen ist, welche die Siegelnaht einer Pouch-Zelle aufnimmt, wobei die Pouch-Zelle auf einer ins Profil integrierten Auflagefläche zumindest teilweise aufliegen kann
- Fig. 9: eine Schnittansicht eines Profils mit starrem Rücken, der aus Metall, einem Thermoplasten oder einem zweiten Elastomer bestehen kann, wobei das Profil ein gutes Stapeln ermöglicht und auch als Teil eines Gehäuses genutzt werden kann,
- Fig. 10: eine Schnittansicht eines Profils mit einem Einlegestab, der aus Metall, einem Thermoplasten oder einem zweiten Elastomer mit einer anderen Shore-Härte als das erste Elastomer bestehen kann, wobei das Profil ermöglicht, den Hauptkraftfluss beim Verpressen an einer Nut vorbei zu führen und wobei dessen starre Rückwand als Teil eines Gehäuses genutzt werden kann,
- Fig. 11: eine Schnittansicht eines Profils mit einem Federblech, wodurch eine Versteifung des Profils gegeben ist, aber dennoch eine gute Verpressung möglich ist,
- Fig. 12: eine Schnittansicht eines Profils mit einem harten Kern, der aus Metall, einem Thermoplasten oder einem zweiten Elastomer mit einer anderen Shore-Härte als das erste Elastomer bestehen kann, wodurch eine weiche Anbindung möglich ist und dennoch eine steifes Profil gegeben ist und wobei dessen starre Rückwand als Teil eines Gehäuses genutzt werden kann,
- Fig. 13: eine Schnittansicht eines Profils, welches als Zweikomponentenbauteil ausgestaltet ist, wodurch eine weiche Anbindung eines an sich steifen Profils möglich ist, welches auch gut verbunden werden kann, wobei dessen starre Rückwand als Teil eines Gehäuses genutzt werden kann,
- Fig. 14: eine Schnittansicht eines Profils mit U-Schiene, wodurch eine Gewichteinsparung und die Möglichkeit zur Aufnahme von anderen Strukturen und Bauteilen gegeben ist,
- Fig. 15: eine Schnittansicht eines Profils mit einer Hohlkammer, wodurch Gewichteinsparung, Materialeinsparung und Kostenreduktion sowie eine weiche Anbindung des Profils möglich sind,
- Fig. 16: eine Schnittansicht eines Profils mit einem Rohr, um beispielsweise ein Kühlungssystem in das Profil zu integrieren,
- Fig. 17: eine Schnittansicht eines Profils mit einem Z-förmigen Querschnitt, wobei durch Hochfalten einer seitlichen Siegelnaht seitlicher Bauraum für die Pouch-Zelle genutzt werden kann, ohne dass die Breite der Siegelnaht reduziert werden muss, wodurch sich eine verbesserte Raumnutzung erzielen lässt,

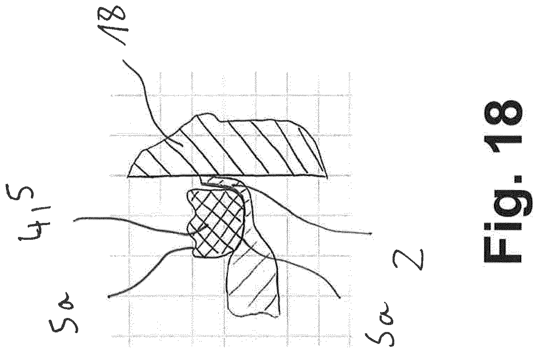

- Fig. 18: eine Schnittansicht eines Profils mit Z-förmigem Querschnitt, welches unter Nutzung einer Gehäusewand als Gegenelement nutzbar ist, wobei durch Hochfalten einer seitlichen Siegelnaht seitlicher Bauraum für eine Pouch-Zelle genutzt werden kann, ohne dass die Breite der Siegelnaht reduziert werden muss, wodurch sich eine verbesserte Raumnutzung erzielen lässt, wobei sich unter Verwendung des Gehäuses als Gegenfläche abermals eine Platzeinsparung ergibt und wobei sich zudem eine Direktkühlung der Pouch- Zellen bewirken lässt, insbesondere dann, wenn eine gekühlte Gehäusewand aus Metall oder einem gut wärmeleitenden Material besteht,
- Fig. 19: in schematischer Ansicht, dass einzelne Profile zu einem kammartigen Profil kombiniert werden können, welches Aussparungen für die Siegelnähte einzelner Pouch-Zellen aufweist, wobei dadurch, dass das Profil kammartig ausgestaltet wird, eine spätere Assemblierung einzelner Profile zu einem Stack entfällt, und wobei die eine Siegelnaht umgebende Aussparung im Profil zusätzlich einseitig oder beidseitig mit Längsnoppen ausgestattet sein kann, um eine gezielte Verpressung auf die Siegelnaht zu erzielen,
- Fig. 20: in schematischer Ansicht Fixierungskonzepte für Pouch-Zellen,
- Fig. 21: in schematischer Ansicht Ansätze, bei denen die Profile auch die Durchführungen der Stromableiter überdecken, und
- Fig. 22: in schematischer Ansicht Ansätze, bei denen die Profile auch die Durchführungen der Stromableiter überdecken, aber einen Bereich der Siegelnaht freilassen.

### Ausführung der Erfindung

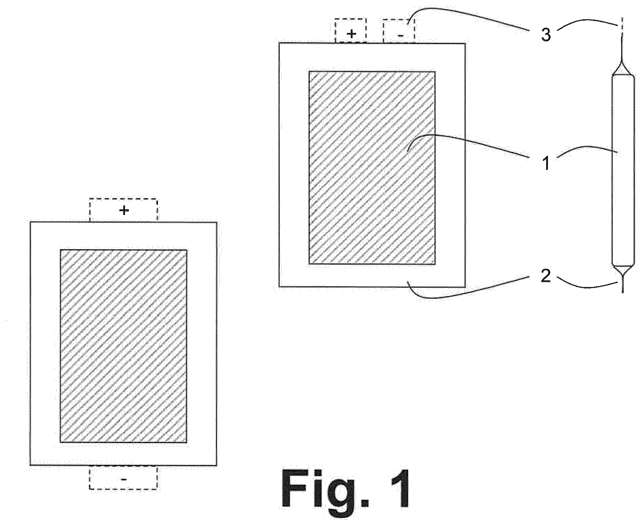

Fig. 1 zeigt in schematischer Ansicht eine Pouch-Zelle, nämlich eine galvanische Zelle mit einer flexiblen Hülle, bestehend aus dem eigentlichen Zellenkörper 1, in welchem sich Elektroden-Separator-Schichten befinden, einer umlaufenden Siegelnaht 2, in deren Bereich die obere und untere Deckfolie miteinander verschweißt sind, sowie zwischen den Deckfolien aus der Zelle herausstehende und zusätzlich mit einer Folie abgedichtete Stromableiter 3. Die Stromableiter 3 können dabei auf der selben Seite aus einem Gehäuse heraus stehen, oder aber auf verschiedenen Seiten liegen.

Beim Betrieb der Zelle, nämlich beim Laden und/ oder Entladen ändert sich die Dicke des Zellkörpers 1 um typischer Weise 5-10% zwischen geladenem und entladenem Zustand. Zudem ist eine gealterte Zelle rund 5% dicker als eine neue Zelle. Demnach ist eine gealterte und geladene Zelle rund 10-15% dicker als eine neue und ungeladene Zelle.

Besonders neue Anodenmaterialien, beispielsweise Silicium-basierte Materialien, welche gegenüber einem derzeit verwendeten Graphit-Träger eine höhere prozentuale Einlagerungskapazität an Lithium ermöglichen, erfahren eine noch höhere Volumenarbeit. Bei neuen Anodenmaterialien, welche höherkapazitive Zellen ermöglichen, wird die Volumenarbeit der Zellen immer relevanter.

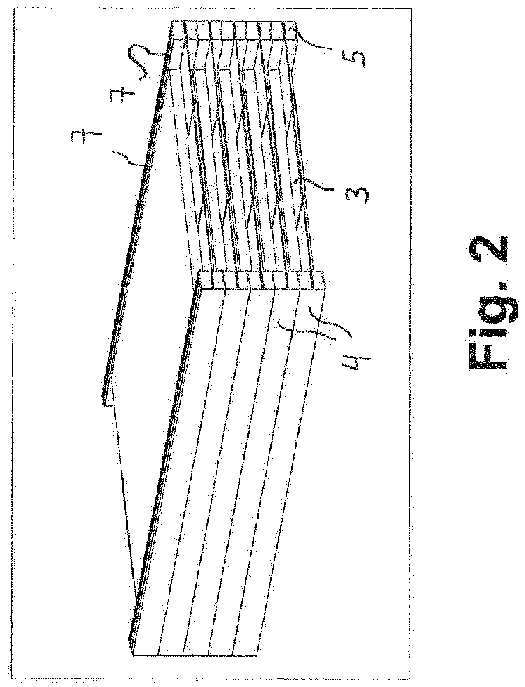

Fig. 2 zeigt ein Aufnahmeelement 4 zur Lagerung von Pouch-Zellen, umfassend einen Grundkörper 5, wobei der Grundkörper 5 als Profil mit einer Anlagefläche 5a zur Anlage an die Siegelnaht 2 ausgebildet ist. Das Profil ist durch ein kontinuierliches Extrusionsverfahren herstellbar. Das Profil ist aus einem Elastomer gefertigt.

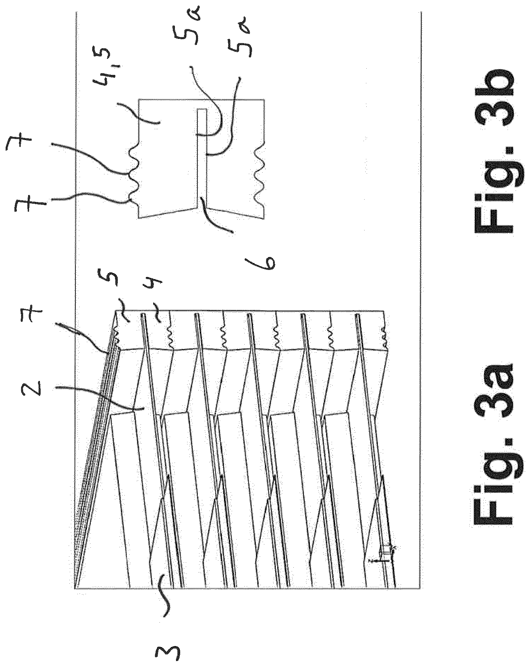

Die Fig. 3a und 3b zeigen, dass das Profil gemäß Fig. 2 eine Aussparung 6 aufweist, um eine Siegelnaht 2 einer Pouch-Zelle aufzunehmen. Die Aussparung 6 weist zwei gegenüberliegende Anlageflächen 5a auf.

Insoweit zeigt Fig. 2 eine Anordnung, nämlich einen Stapel oder Stack, umfassend mindestens zwei Aufnahmeelemente 4 und mindestens eine Pouch-Zelle, wobei die Siegelnaht 2 der Pouch-Zelle in einem Profil platziert ist. Die Profile verpressen die Siegelnaht 2 der Pouch-Zelle auf beiden Seiten.Die Aufnahmeelemente 4 umgeben zumindest zwei Seiten einer Pouch-Zelle.

Das Profil ist mit einer Dichtlippenstruktur 7 versehen, welche mehrere parallele Dichtlippen umfasst.

Zwischen den Pouch-Zellen besteht ein definierter Spalt, um eine Dickenänderung beim Laden sowie über die Lebenszeit zu kompensieren oder eine Kühlung durch einen Luftstrom oder Gebläse zwischen den Pouch-Zellen zu erzielen.

Alternativ kann der Spalt mit komprimierbaren Elementen ausgestattet sein, insbesondere mit Schäumen oder Vliesstoffen. Diese können als wärmeübertragende Komponenten fungieren. Alternativ sind auch feuerfeste Materialien denkbar, insbesondere "Fireblocker"-Vliesstoffe. Diese können ein Auftreten und insbesondere eine Ausbreitung von Bränden innerhalb des Stacks verhindern oder verringern.

Eine Kühlung kann zudem durch eine Kontaktkühlung an den Stromableitern oder durch eine seitliche Kontaktkühlung der Profile erfolgen.

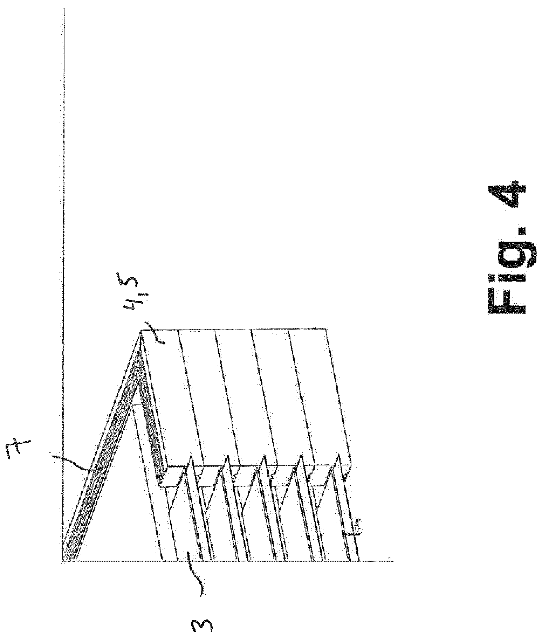

Fig. 4 zeigt eine Anordnung, bei der ein Profil um eine Ecke geführt wird und dem Stromableiter 3 Raum lässt.

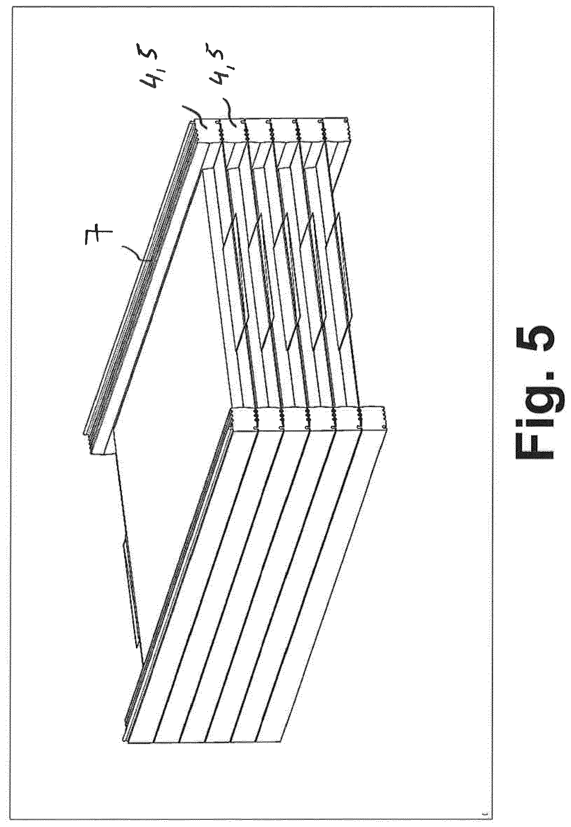

Fig. 5 zeigt eine Anordnung, umfassend mindestens zwei Aufnahmeelemente 4 und mindestens eine Pouch-Zelle, wobei die Siegelnaht 2 der Pouch-Zelle zwischen zwei benachbarten Profilen platziert ist.

Fig. 4 und 5 zeigen Anordnungen, bei denen durch nachträgliches Einbringen bzw. Anbringen von Schrauben oder Gewinden in das Profil aus Elastomer Stromschienen an das Profil angebracht werden können, welche die Reihenschaltung der einzeln Pouch-Zellen ermöglichen.

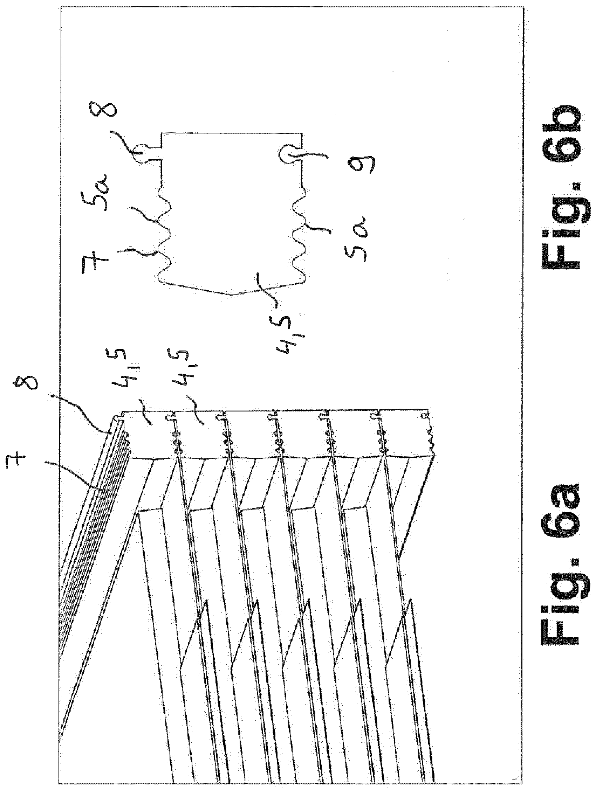

Fig. 6a und 6b zeigen Detailansichten des Profils gemäß Fig. 5. Das Profil ist mit einer Dichtlippenstruktur 7 versehen, welche mehrere, parallele Dichtlippen umfasst. Des Weiteren weist das Profil ein Krallelement 8 und eine Krallelementaufnahme 9 auf. Das Krallelement 8 kann formschlüssig in eine Krallelementaufnahme 9 eines anderen Profils eingreifen, um einen Stapel oder Stack aufzubauen.

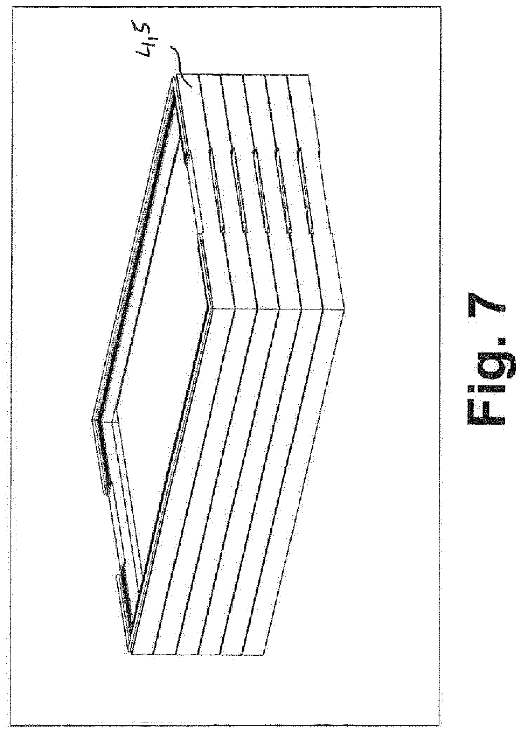

Fig. 7 zeigt eine Anordnung, bei welcher die Aufnahmeelemente 4 drei Seiten einer Pouch-Zelle umgeben.

Auch bei dieser Anordnung können durch nachträgliches Einbringen bzw. Anbringen von Schrauben oder Gewinden in das Profil aus Elastomer Stromschienen an das Profil angebracht werden, welche eine Reihenschaltung der Pouch-Zellen ermöglichen.

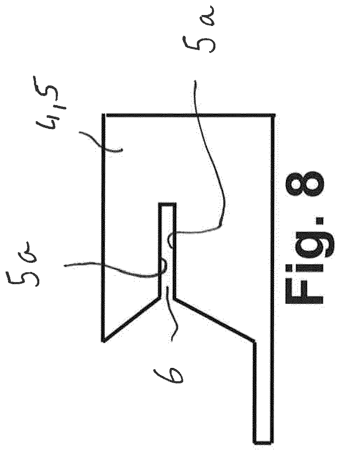

Fig. 8 zeigt in einer Schnittansicht ein Profil, welches besonders bevorzugt bei horizontalem Stack-Aufbau verwendet wird. Es erlaubt eine einfache Montage und zeigt eine gute Resistenz gegenüber Schocks oder Vibrationen.

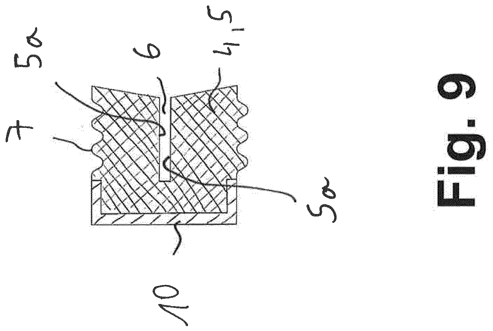

Fig. 9 zeigt ein Profil, welches aus zwei Materialien gefertigt ist, wobei ein zweites Material härter ist als ein erstes Material. Das Profil weist einen starren Rücken 10 auf, der aus dem zweiten Material gefertigt ist.

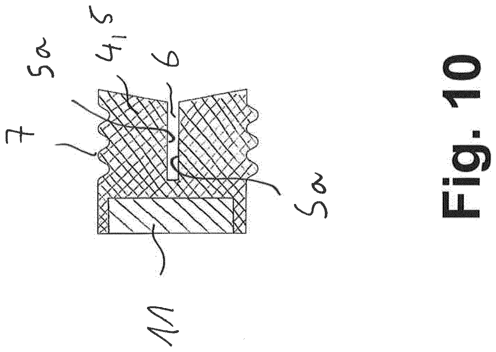

Fig. 10 zeigt eine Schnittansicht eines Profils mit einem Einlegestab 11, der aus Metall, einem Thermoplasten oder einem zweiten Elastomer mit einer anderen Shore-Härte als das erste Elastomer besteht.

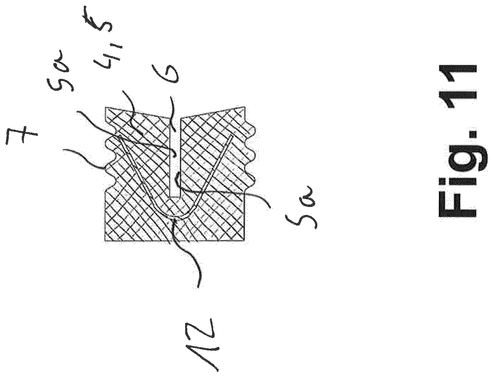

Fig. 11 zeigt eine Schnittansicht eines Profils mit einem Federblech12, wodurch eine Versteifung des Profils gegeben ist, aber dennoch eine gute Verpressung möglich ist.

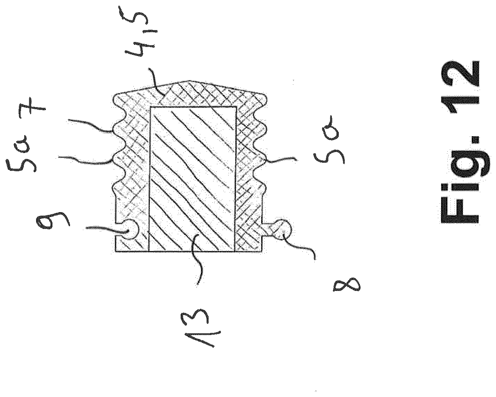

Fig. 12 zeigt eine Schnittansicht eines Profils mit einem harten Kern 13, der aus Metall, einem Thermoplasten oder einem zweiten Elastomer mit einer anderen Shore-Härte als das erste Elastomer bestehen kann.

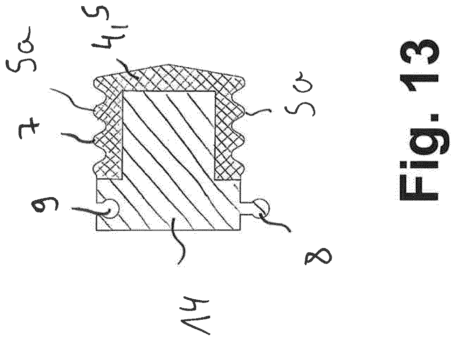

Fig. 13 zeigt eine Schnittansicht eines Profils, welches als Zweikomponentenbauteil ausgestaltet ist. Dessen starrere Rückwand 14 weist ein Krallelement 8 und eine Krallelementaufnahme 9 auf.

Auf einer Seite einer Siegelnaht 2 kann so ein hartes Profil anliegen, auf der anderen hingegen ein weiches. Dies ist dann besonders sinnvoll, wenn das harte Profil als zusätzliche Ablagestütze fungieren kann, nämlich unterhalb einer Pouch- Zelle platziert ist.

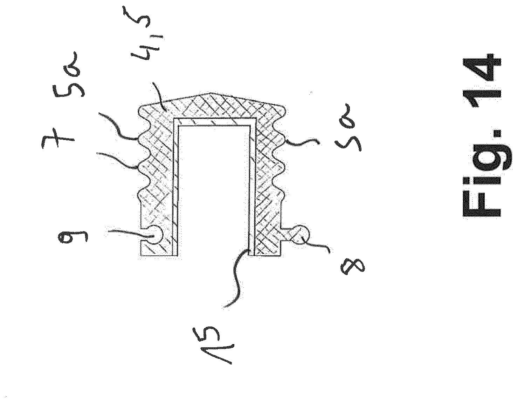

Fig. 14 zeigt eine Schnittansicht eines Profils mit einer U-Schiene 15, wodurch eine Gewichteinsparung und die Möglichkeit zur Aufnahme von anderen Strukturen und Bauteilen gegeben ist.

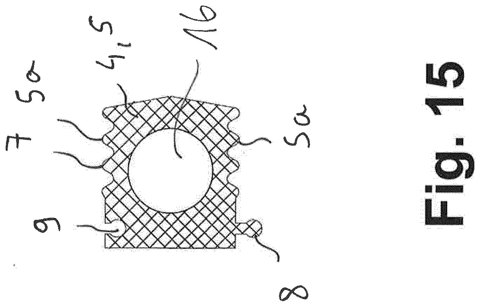

Fig. 15 zeigt eine Schnittansicht eines Profils mit einer abgeschlossenen Hohlkammer 16.

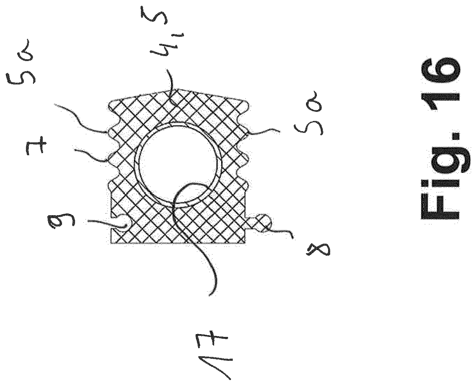

Fig. 16 zeigt eine Schnittansicht eines Profils mit einem Rohr 17. Dieses Rohr 17 kann beispielsweise als Kühlrohr ausgestaltet sein, um ein Kühlungssystem in das Profil zu integrieren.

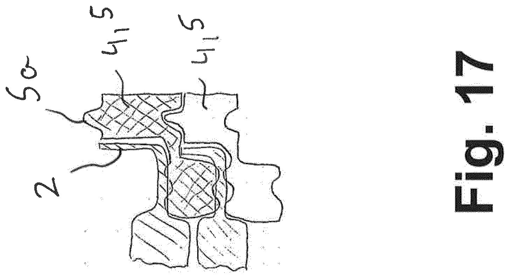

Fig. 17 zeigt eine Schnittansicht eines Profils mit einem Z-förmigen Querschnitt, wobei durch Hochfalten einer seitlichen Siegelnaht 2 seitlicher Bauraum für die Pouch-Zelle genutzt werden kann, ohne dass die Breite der Siegelnaht 2 reduziert werden muss. Auch bei diesem Profil sind die bereits erwähnten Mittel zur Versteifung des Profils denkbar.

Fig. 18 eine Schnittansicht eines Profils mit Z-förmigem Querschnitt, welches unter Nutzung einer Gehäusewand 18 als Gegenelement nutzbar ist, wobei durch Hochfalten einer seitlichen Siegelnaht 2 seitlicher Bauraum für eine Pouch-Zelle genutzt werden kann.Unter Verwendung der Gehäusewand 18 als Gegenfläche ergibt sich eine Platzeinsparung und es lässt sich eine Direktkühlung der Pouch- Zellen bewirken, insbesondere dann, wenn eine gekühlte Gehäusewand 18 aus Metall oder einem gut wärmeleitenden Material besteht.

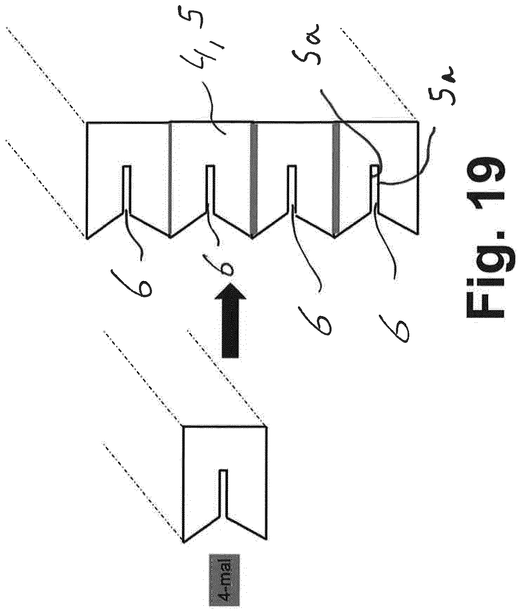

Fig. 19 zeigt ein Aufnahmeelement 4 dessen Profil kammartig ausgebildet ist, nämlich mehrere Aussparungen 6 aufweist, um Siegelnähte 2 mehrerer Pouch-Zellen aufzunehmen.

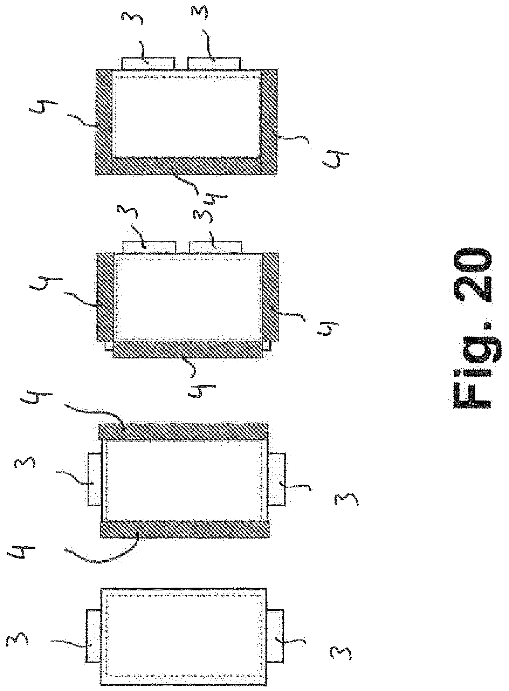

Fig. 20 zeigt von links nach rechts eine Pouch-Zelle ohne Aufnahmeelemente 4, eine Pouch-Zelle mit gegenüber liegenden Stromableitern 3, wobei sich Aufnahmeelemente 4 an den Seiten befinden, die keine Stromableiter 3 aufweisen, eine Pouch-Zelle mit nur an einer Seite liegenden Stromableitern 3, wobei sich die Aufnahmeelemente 4 an den drei übrigen drei Seiten befinden, wobei in diesem Fall die Ecken der Pouch-Zelle ausgespart sind, wodurch eine schnelle und einfache Montage ermöglicht wird, und eine Pouch-Zelle mit nur an einer Seite liegenden Stromableitern 3, wobei sich die Aufnahmeelemente 4 an den drei übrigen Seiten befinden. In den drei rechts gezeigten Anordnungen verpressen die Profile die Siegelnaht 2 der Pouch-Zellen zumindest auf einer Seite elastisch.

In der rechten Anordnung sind die Ecken von jeweils einem Profil überdeckt. Dies hat den Vorteil eines erhöhten mechanischen Schutzes sowie der reduzierten Permeation von Gasen oder Flüssigkeiten in diesen Bereichen. Hierbei ist es denkbar, die Profile aneinander zu legen, wie dies dargestellt ist. Es ist auch denkbar, einen Gehrungsschnitt anzubringen und so die Profile in einem 45°-Winkel oder einem anderen Winkel aneinander zu legen, der durch die Geometrie der Pouch-Zelle vorgegeben ist. Die zwischen den Profilen bestehende Naht kann optional mit einem Kleber abgedichtet werden, was besonders die Permeation an die Siegelnaht 2 reduzieren kann. Der seitliche, nach außen offene Bereich kann optional mit einem Kleber abgedichtet werden, was besonders die Permeation an die Siegelnaht 2 reduzieren kann.

Die Siegelnaht 2 kann vor diesem Hintergrund einfach zwischen zwei Profilen platziert werden.

Bei Verwendung eines Profils, welches die Siegelnaht 2 aufnimmt, kann durch Einbringung von Kerben oder Schnitten durch das Profil ein ähnlicher Aufbau realisiert werden.

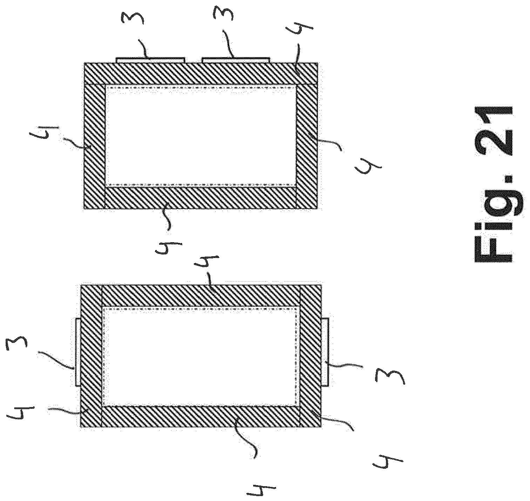

Fig. 21 zeigt in schematischer Ansicht Ansätze, bei denen die Profile auch die Durchführungen der Stromableiter 3 überdecken.Bei Verwendung eines Profils, welches die Siegelnaht 2 aufnimmt, kann durch Einbringung von Kerben oder Schnitten im Bereich der Stromableiter 3 ein Aufbau realisiert werden, der es erlaubt, dass die Stromableiter 3 durch das Profil hindurchragen. Fig. 21 zeigt, dass auch Bereiche von Stromableitern 3 von Profilen verpresst sind.

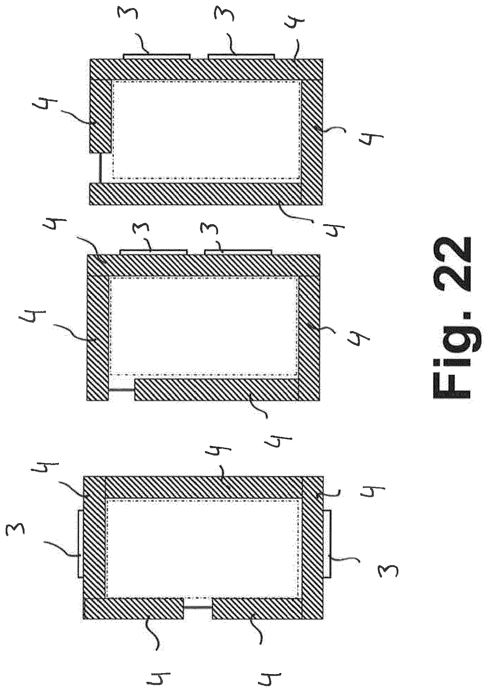

Fig. 22 zeigt in schematischer Ansicht Ansätze, bei denen die Profile auch die Durchführungen der Stromableiter 3 überdecken, aber einen Bereich der Siegelnaht 2 freilassen. Ein freigelassener Bereich kann als Berstscheibe fungieren. Bei einem schadhaften inneren Überdruck öffnet die Pouch-Zelle in diesem Bereich. Emittierte Gase, Abbauprodukte oder Elektrolyt können kontrolliert abgeführt werden. Es kann vermieden werden, dass diese mit den stromführenden Teilen in Berührung kommen. So können Brände und Explosionen vermieden werden.

Fig. 22 zeigt insoweit, dass ein Bereich der Siegelnaht, der nicht unmittelbar benachbart zu Stromableitern 3 liegt, nicht von einem Profil verpresst ist, um diesen Bereich als Sollbruchstelle im Falle eines inneren Überdrucks auszubilden.

In den hier gezeigten Anordnungen pressen die Profile als Teile eines Stapels beidseitig auf Siegelnähte 2, wobei die Anordnung selbst zumindest teilweise formschlüssig in einem Gehäuse platziert sein kann und wobei das Gehäuse die Funktion der Verpressung des Stapels übernimmt.

Für die Assemblierung von mit Rahmen ausgestatteten Pouch Zellen zu einem Stapel oder Stack sind mehrere Ausführungen denkbar. Ein Fixierung des Stacks mit Klemmen, mit Spannbändern, mit Gewindestangen oder Schrauben, die durch die Profile reichen, sind denkbar. Eine Fixierung in einem Gehäuse, wobei nach Einlegen der Stacks ein Deckel aufgesetzt wird, welcher die Verpressung sicherstellt, ist ebenfalls denkbar.

Eine Fixierung in einem Regal, wobei die Verpressung durch Wände des Regals sicher gestellt wird, ist ebenfalls denkbar. Das Regal kann dabei nach vorne und hinten, nur nach hinten oder nur nach vorne zumindest teilweise geöffnet sein. Dies erlaubt eine einfache Anbringung der elektrischen Kontaktierung bzw. der Kühlung. Eine Luftkühlung, insbesondere mittels Ventilatoren, ist möglich. Eine Fixierung mittels metallischen Klammern, die die Profile umschließen und verklammern, ist ebenfalls denkbar.

Eine Einbringung einer Öffnung in das den Stack umgebende Gehäuse, welche an der selben Position angebracht ist wie Aussparungen der Profile, ist ebenfalls denkbar. Bei einem Öffnen der Pouch-Zelle können die emittierten Schadgase durch die Öffnung des Gehäuses sicher entfernt werden. Eine elastomere Dichtung stellt dabei sicher, das der Großteil der Gase durch die Öffnung gelangen kann und höchstens nur ein sehr kleiner Teil auf einem nicht gewünschten Leckagepfad zwischen Profil und innerer Gehäusewand entkommen kann.

## Patentansprüche

1. Anordnung, umfassend mindestens zwei Aufnahmeelemente (4) und mindestens eine Pouch-Zelle, wobei die Aufnahmeelemente (4) jeweils einen Grundkörper (5) umfassen, wobei der Grundkörper (5) als Profil mit einer Anlagefläche (5a) zur Anlage an eine Siegelnaht (2) einer Pouch-Zelle ausgebildet ist, wobei eine Siegelnaht (2) der Pouch-Zelle in einem Profil oder zwischen zwei benachbarten Profilen platziert ist, **dadurch gekennzeichnet, dass** das Profil zumindest teilweise aus einem Elastomer, einem thermoplastischen Elastomer oder einem geschlossenporigen Schaum gefertigt ist oder diese Materialien aufweist und dass das Profil oder zwei benachbarte Profile die Siegelnaht (2) der Pouch-Zelle beidseitig elastisch verpressen.

2. Anordnung nach Anspruch 1, **dadurch gekennzeichnet, dass** das Profil ausschließlich aus einem Elastomer oder einem thermoplastischen Elastomer gefertigt ist.

3. Anordnung nach Anspruch 1 oder 2, **dadurch gekennzeichnet, dass** das Profil aus zwei Materialien gefertigt ist, wobei ein zweites Material härter ist als ein erstes Material.

4. Anordnung nach einem der voranstehenden Ansprüche, **dadurch gekennzeichnet, dass** das Profil eine Aussparung (6) aufweist, um eine Siegelnaht (2) der Pouch-Zelle aufzunehmen.

5. Anordnung nach einem der voranstehenden Ansprüche, **dadurch gekennzeichnet, dass** das Profil kammartig ausgebildet ist, nämlich mehrere Aussparungen (6) aufweist, um Siegelnähte (2) mehrerer Pouch-Zellen aufzunehmen.

6. Anordnung nach einem der Ansprüche 1 bis 5, **dadurch gekennzeichnet, dass** die Aufnahmeelemente (4) zumindest zwei Seiten einer Pouch-Zelle umgeben.

7. Anordnung nach einem der Ansprüche 1 bis 6, **dadurch gekennzeichnet, dass** die Aufnahmeelemente (4) drei oder vier Seiten einer Pouch-Zelle umgeben.

8. Anordnung nach einem der Ansprüche 1 bis 7, **dadurch gekennzeichnet, dass** auch Bereiche von Stromableitern (3) vom Profil verpresst sind.

9. Anordnung nach einem der Ansprüche 1 bis 8, **dadurch gekennzeichnet, dass** ein Bereich der Siegelnaht (2), der nicht unmittelbar benachbart zu Stromableitern (3) liegt, nicht vom Profil verpresst ist, um diesen Bereich als Sollbruchstelle im Falle eines inneren Überdrucks auszubilden.

10. Anordnung nach einem der Ansprüche 1 bis 9, **dadurch gekennzeichnet, dass** die Profile als Teile eines Stapels beidseitig auf Siegelnähte (2) anpressen, wobei diese Anordnung zumindest teilweise formschlüssig in einem Gehäuse platziert ist und wobei das Gehäuse die Funktion der Verpressung des Stapels übernimmt.

11. Batterie-Modul, enthaltend eine Anordnung mit Pouch-Zellen und Aufnahmeelementen nach einem der vorherigen Ansprüche.

## Claims

1. Arrangement comprising at least two receiving elements (4) and at least one pouch cell, the receiving elements (4) each comprising a base body (5), the base body (5) being designed as a profile with a bearing surface (5a) for bearing against a sealing seam (2) of a pouch cell, a sealing seam (2) of the pouch cell being placed in a profile or between two adjacent profiles, **characterized in that** the profile is at least partially made of an elastomer, a thermoplastic elastomer or a closed-pore foam or comprises these materials, and **in that** the profile or two adjacent profiles elastically press the sealing seam (2) of the pouch cell on both sides.

2. The arrangement according to claim 1 , **characterized in that** the profile is made exclusively of an elastomer or a thermoplastic elastomer.

3. An arrangement according to claim 1 or 2, **characterized in that** the profile is made of two materials, a second material being harder than a first material.

4. An arrangement according to any one of the preceding claims, **characterized in that** the profile has a recess (6) to receive a sealing seam (2) of the pouch cell.

5. Arrangement according to one of the preceding claims, **characterized in that** the profile is comb-like, namely has a plurality of recesses (6) for receiving sealing seams (2) of a plurality of pouch cells.

6. Arrangement according to any one of claims 1 to 5 , **characterized in that characterized in that** the receiving elements (4) have at least two sides
surrounded by a pouch cell.

7. Arrangement according to any one of the claims to 6, **characterized in that**
**characterized in that** the receiving elements (4) surround three or four sides of a pouch cell.

8. Arrangement according to any one of claims 1 to 7 , **characterized in that characterized in that** also areas of current conductors (3) are excluded from the profile are pressed.

9. Arrangement according to any one of claims 1 to 8 , **characterized in that characterized in that** a region of the sealing seam (2) which is not immediately adjacent to current conductors (3) is not pressed by the profile in order to form this region as a predetermined breaking point in the event of an internal overpressure.

10. Arrangement according to any one of claims 1 to 9 , **characterized in that characterized in that** the profiles are mounted as parts of a stack on both sides of the press on sealing seams (2), whereby this arrangement at least partially is positively placed in a housing and wherein the housing contains the function of pressing the stack takes over.

11. A battery module comprising an arrangement with pouch cells and receiving elements according to any one of the preceding claims.

## Revendications

1. Ensemble comprenant au moins deux éléments de réception (4) et au moins une cellule de poche, les éléments de réception (4) comprenant chacun un corps de base (5), le corps de base (5) étant réalisé sous forme de profilé avec une surface d'appui (5a) pour l'appui sur un cordon de scellage (2) d'une cellule de poche, un cordon de scellage (2) de la cellule de poche étant placé dans un profilé ou entre deux profilés voisins, **caractérisé en ce que** le profilé est fabriqué au moins partiellement à partir d'un élastomère, d'un élastomère thermoplastique ou d'une mousse à pores fermés ou présente ces matériaux et **en ce que** le profilé ou deux profilés voisins pressent élastiquement des deux côtés le joint de scellage (2) de la cellule de poche.

2. Ensemble selon la revendication1 , **caractérisé en ce que** le profilé est fabriqué exclusivement à partir d'un élastomère ou d'un élastomère thermoplastique.

3. Ensemble selon la revendication 1 ou 2, **caractérisé en ce que** le profilé est fabriqué à partir de deux matériaux, un deuxième matériau étant plus dur qu'un premier matériau.

4. Ensemble selon l'une quelconque des revendications précédentes, **caractérisé en ce que** le profilé comporte un évidement (6) destiné à recevoir un cordon de soudure (2) de la cellule de la pochette.

5. Ensemble selon l'une des revendications précédentes, **caractérisé en ce que** le profilé est en forme de peigne, à savoir qu'il présente plusieurs évidements (6) pour recevoir des joints de scellage (2) de plusieurs cellules de la pochette.

6. Enselble selon l'une des revendications 1 à 5 , **caractérisé en ce que caractérisé en ce que** les éléments de réception (4) ont au moins deux côtés d'une cellule de Pouch.

7. Ensemble selon l'une des revendications à 6 , **caractérisé en ce que caractérisé en ce que** les éléments de réception (4) entourent trois ou quatre côtés d'une cellule de poche.

8. Ensemble selon l'une des revendications 1 à 7 , **caractérisé en ce que caractérisé en ce que** des zones de conducteurs de courant (3) sont également exclues de l'alimentation électrique sont pressés dans le profil.

9. Ensemble selon l'une des revendications 1 à 8 , **caractérisé en ce que caractérisé en ce qu'**une zone du cordon de soudure (2), qui n'est pas directement adjacente à des conducteurs de courant (3), n'est pas comprimée par le profilé, afin de réaliser cette zone comme point destiné à la rupture en cas de surpression interne.

10. Ensemble selon l'une des revendications 1 à 9 , **caractérisé en ce que caractérisé en ce que** les profilés, en tant que parties d'un empilement, sont montés des deux côtés sur des supports en plastique.
(2), cette disposition étant au moins en partie
est placé par complémentarité de forme dans un boîtier, et dans lequel le boîtier est fonction de pressage de la pile.

11. Module de batterie comprenant un ensemble avec cellules Pouch et d'éléments de réception selon l'une des revendications précédentes.
